# EUROPÄISCHE PATENTSCHRIFT

(11) **EP 0 674 601 B1**
(45) Veröffentlichungstag und Bekanntmachung des Hinweises auf die Patenterteilung: **22.01.1997**
(21) Anmeldenummer: 94900096.2
(22) Anmeldetag: 05.11.1993
(51) Int. Cl.: C01F 11/46

(54) **VERFAHREN ZUR VERBESSERUNG DES WEISSGRADES VON ROHGIPS**
PROCESS FOR IMPROVING THE BRIGHTNESS OF RAW GYPSUM
PROCEDE PERMETTANT D'AMELIORER LE DEGRE DE BLANC DU PLATRE

(30) Priorität: 15.12.1992 DE 4242200
(43) Veröffentlichungstag der Anmeldung: 04.10.1995
(73) Patentinhaber: STEAG AG, D-45128 Essen (DE)
(72) Erfinder: WINKLER, Hermann, D-45665 Recklinghausen (DE)
(86) Internationale Anmeldenummer: EP9303089
(87) Internationale Veröffentlichungsnummer: WO9413586

(56) Entgegenhaltungen:
- EP-A- 0 476 354
- DD-A- 235 629
- DE-A- 3 119 422
- DE-A- 4 035 042
- GB-A- 2 039 269
- CHEMICAL ABSTRACTS, vol. 82, no. 10, 10. März 1975, Columbus, Ohio, US; abstract no. 63653d, M. TAKAHASHI ET AL. 'Purification of chemical gypsum.' Seite 410 ;
- CHEMICAL ABSTRACTS, vol. 84, no. 12, 22. März 1976, Columbus, Ohio, US; abstract no. 78798v, M. TAKAHASI ET AL. 'Purification of chemical gypsum.' Seite 321 ;
- CHEMICAL ABSTRACTS, vol. 82, no. 10, 10. März 1975, Columbus, Ohio, US; abstract no. 63653d, M. TAKAHASHI ET AL. 'Purification of chemical gypsum.' Seite 410 ; & JP,A,49 098 797 (NIPPON MINING) 18. September 1974
- CHEMICAL ABSTRACTS, vol. 84, no. 12, 22. März 1976, Columbus, Ohio, US; abstract no. 78798v, M. TAKAHASI ET AL. 'Purification of chemical gypsum.' Seite 321 ; & JP,A,50 062 896 (NIPPON MINING) 29. Mai 1975

## Beschreibung

Die Erfindung bezieht sich auf ein Verfahren zur Verbesserung des Weißgrades von Rohgips, wobei der bei der Rauchgasentschwefelung mittels Kalkmilch in Form einer Suspension aus der Flüssigphase erhaltene Rohgips auf einem Vakuumbandfilter als Filterkuchen abgelegt und mit Waschwasser behandelt wird.

Mit herkömmlichen Verfahren dieser Art, wie sie beispielsweise aus der EP-A-476 354 bekannt sind, werden Gips-Weißgrade (gemessen gegen Baryt-Standard) bis zu etwa 75-78% erreicht. Für die meisten Gipsanwendungsfälle reicht dieser Weißgrad aus; für diffizilere Anwendungen, beispielsweise für Stukkateursarbeiten, erwartet der Anwender höhere Weißgrade, die nur durch aufwendige Nachbehandlungsprozesse erreichbar sind. Dementsprechend erzielt ein Gips-Fertigprodukt mit einem verbesserten Weißgrad von über 80% einen deutlich höheren Marktpreis.

Ferner ist in den CHEMICAL ABSTRACTS, vol 82, no 10, abstract nr. 63653d, ein Verfahren zum Reinigen von Gips, nämlich zum Entfernen von Metallverbindungen, beschrieben, bei dem beispielsweise eine dunkelbraune Abfallgipssuspension mit SO₂-Gas behandelt wird. Dies führt zu einer Erniedrigung des Kobaltgehaltes und folglich zu einer Verbesserung des Weißgrades. Allerdings ist es erforderlich, den Gips (Calciumsulfatdihydrat) vor der SO₂-Behandlung in Hemihydrat umzusetzen und letzteres nach der Behandlung durch Abkühlen der Lösung wieder zurück in Dihydrat umzuwandeln.

Schließlich beschreibt die DD-A-235 629 ein Verfahren zum Reinigen von Abfallgips, der nach dem Phosphorsäureprozeß hergestellt worden ist, wobei eine wässrige Suspension des Gipses in einem Behälter mit SO₂ behandelt wird. Eine Umsetzung (De- und Rehydration) findet nicht statt. Aufgabe dieses Verfahrens ist die Entfernung von im Phosphorgips immer anwesenden Verunreinigungen, wie P₂O₅ und F. Eine Erhöhung des Weißgrades des Gipses ist nicht erwähnt.

Der Erfindung liegt die Aufgabe zugrunde, das bekannte Verfahren der eingangsgenannten Art so zu verbessern, daß ein deutlich höherer Gips-Weißgrad bei geringem baulichen und betrieblichen Mehraufwand erreichbar ist.

Gelöst wird diese Aufgabe bei einem Verfahren der eingangs genannten Art erfindungsgemäß dadurch, daß der Rohgips mit mit SO₂ begastem Waschwasser gewaschen wird, wobei der Gips durch Reduktion der färbenden Bestandteile gebleicht wird.

In der Rohgipssuspension, die in einer Hydrozyklonstation abgeschieden wird, sind als färbende Bestandteile vor allem Mn⁴⁺O₂ (Braunstein) und Fe³⁺(OH)₃ enthalten. Bei dem erfindungsgemäßen Verfahren werden die zuvor genannten farbgebenden Substanzen nach den folgenden (unvollständigen) Reaktionsgleichungen in farblose Substanzen umgewandelt:

Mn⁴⁺ + SO₂ ... > Mn²⁺ + SO₄²⁻ ...

Fe³⁺ + SO₂ ... > Fe²⁺ + SO₄²⁻ ...

Das erfindungsgemäße Verfahren hat den großen Vorteil, daß es sich ohne beachtlichen technologischen und verfahrensmäßigen Mehraufwand in das konventionelle Verfahren zur Gipsbehandlung nach REA einbinden läßt. Die Waschwasserbehandlung findet ohnehin statt. Der technologische Aufwand bei der Anreicherung bzw.

Sättigung des Waschwassers mit gasförmigem SO₂ ist gering. Es bedarf nur einer zusätzlichen SO₂-Gasquelle und einer geeigneten Dosiervorrichtung, mit der das Waschwasser im Waschwasserbehälter begast wird. Es wurde gefunden, daß der Weißgrad des das Vakuumbandfilter verlassenden Reingipses nach einer Behandlung mit SO₂-angereichertem Waschwasser bei etwa 82% (Baryt-Standard) liegt. Dies bedeutet eine Weißgraderhöhung um 4 bis 7% gegenüber der herkömmlichen Verfahrensweise bei Verwendung von einfachem Waschwasser. Die Grenze für einen hohen Weißgrad liegt bei etwa 80%. Diese Grenze und damit ein wesentlich höherwertiges Produkt kann durch die Erfindung problemlos erreicht werden. Es sind Weißgrade von 84% und sogar mehr erzielbar.

Die erfindungsgemäße Behandlung läßt sich auch mit anderen Gipsgewinnungsverfahren kombinieren. Ferner ist eine Behandlung in einer der konventionellen Gipsgewinnung nachgeschalteten Verfahrensstufe möglich (Behandlung des von dem Vakuumbandfilter kommenden Reingipses mit in Wasser gelöstem gasförmigen SO₂ in einem Rührer). Diese Verfahrensalternative ist jedoch verfahrenstechnisch aufwendiger (ein zusätzlicher Rührer wird gebraucht) und dann wirtschaftlich sinnvoll, wenn extrem hohe Weißgrade erforderlich sind.

Die Begasung des Waschwassers mit SO₂ im Waschwasserbehälter der REA findet gemäß einer bevorzugten Weiterbildung der Erfindung bei einer Temperatur von 25 bis 35°C, vorzugsweise bei ca. 30°C statt.

Der Filterkuchen wird vorzugsweise in einer zweiten Zone des Vakuumbandfilters mit dem SO₂-haltigen Waschwasser gewaschen. Das Waschwasser kann mittels einer Düsenanordnung auf den die zweite Filterzone durchlaufenden Filterkuchen auf gedüst werden.

Der Bedarf an gasförmigem SO₂ kann gemäß einer Weiterbildung der Erfindung auch aus dem im REA-Wäscher anfallenden Abgas gedeckt werden. Dieses enthält ca. 350 mg SO₂/m³_{N}.

Vorzugsweise wird das Waschwasser mit dem SO₂ so lange begast, bis eine Konzentration des SO₂ von etwa 0,5 bis 1,5 g/l im Waschwasser erreicht ist.

In alternativer Lösung der gestellten Aufgabe ist das Verfahren nach der Erfindung dadurch gekennzeichnet, daß die Rohgipssuspension mit in Wasser gelöstem SO₂ behandelt wird, bevor der Rohgips auf dem Vakuumbandfilter abgelegt wird, wobei die Rohgipssuspension während der Behandlung vorzugsweise gerührt wird.

Im folgenden wird die Erfindung anhand eines in der einzigen Figur schematisch dargestellten Ausführungsbeispiels einer Anlage zur Gewinnung von Reingips näher erläutert.

Die im REA-Wäscher durch Reaktion von Kalkmilch und Schwefelverbindungen entstandene Gipssuspension wird über eine Leitung 2 einem Zyklonenabscheider 3 zugeführt. Der im Zyklonenabscheider 3 abgeschiedene und über den Feststoffaustrag 4 ausgetragene Rohgips wird auf dem Förderband eines Vakuumbandfilters 5 abgelegt. Der Filterkuchen 6 wird ähnlich herkömmlichen Verfahren über eine Düsenanordnung 7 mit Waschwasser bedüst bzw. gewaschen. Hinter dem Vakuumbandfilter steht das Gips-Fertigprodukt zur Abförderung und/oder Lagerung zur Verfügung. An der Abwurfstelle 8 hatte der Gips nach herkömmlicher Behandlung einen Weißgrad von unter 78%.

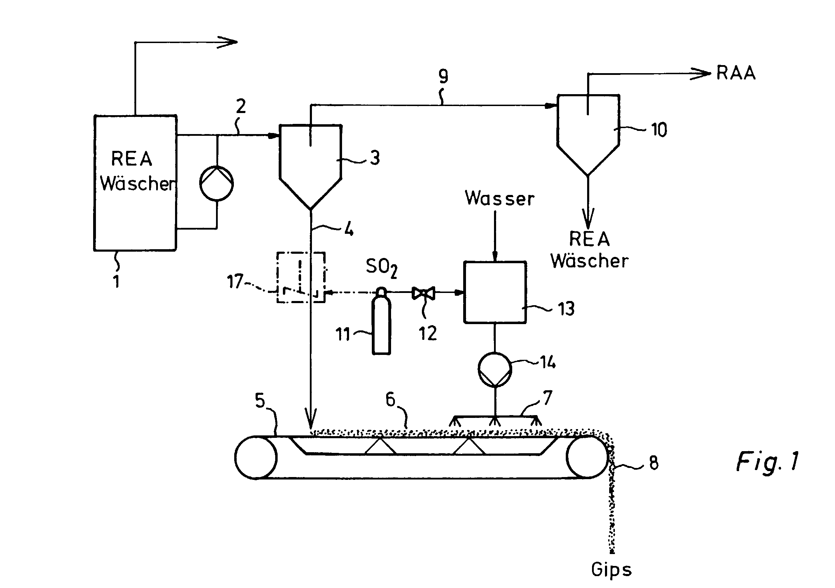

Das Abwasser aus dem Zyklonabscheider 3 wird über eine Leitung 9 einem Abwasserzyklon 10 zugeführt; dessen unterer Austrag ist zum REA-Wäscher 1 rückgeführt; dessen oberer Ablauf führt zur Abwasseranlage. Auch insoweit ist die in Fig. 1 dargestellte Anordnung prinzipiell herkömmlicher Art. Abweichend von herkömmlichen Reingipserzeugungsanlagen wird das Waschwasser bei der beschriebenen Verfahrensweise vor dem Aufdüsen über die Düsenanordnung 7 mit gasförmigem SO₂ angereichert bzw. gesättigt. Das SO₂ wird in dem beschriebenen Beispiel einer als Gasquelle dienenden Gasflasche 11 entnommen und über eine geeignete Dosiervorrichtung 12 in einen Waschwasserbehälter 13 eingeleitet. Einleitungsdauer und über die Dosiervorrichtung 12 zugeführte SO₂-Menge werden so bemessen, daß im Waschwasser eine SO₂-Konzentration von ca. 1 gSO₂/l erreicht wird. Die Begasung des Waschwassers im Waschwasserbehälter 13 findet bei einer Temperatur von etwa 30°C statt. Das mit gasförmigem SO₂ angereicherte Waschwasser wird über eine Pumpe 14 und Düsenanordnung 7 auf den Filterkuchen 6 insbesondere im Bereich der zweiten Stufe des Vakuumbandfilters 5 aufgesprüht. Als Folge dieser Behandlung mit SO₂-haltigem Waschwasser wird der Gips einer Reaktion unterworfen, bei der den Weißgrad mindernde Bestandteile (Fe³⁺ und Braunstein) durch Reduktion mittels SO₂ in farblose Verbindungen übergehen. Das Ergebnis am Abwurfpunkt 8 ist ein Reingips mit einem Weißgrad von deutlich über 80%, erfahrungsgemäß etwa 82% oder mehr.

In die mit dem unteren Austrag 4 des Zyklonenabscheiders verbundene Leitung kann ein (in Fig. 1 strichpunktiert dargestelltes) Rührwerk 17 eingebunden sein. In dieses Rührwerk wird eine Gipssuspension aus dem Austrag 4 mit gasförmigem SO₂ aus der Gasquelle 11 vermischt. Es finden sehr intensive Reaktionen nach den oben angegebenen Reaktionsgleichungen statt, die zu einer starken Erhöhung des Weißgrades führen, stärker noch als bei Behandlung des Filterkuchens 6 durch Besprühen mit SO₂-gesättigtem Waschwasser. An der Abwurfstelle 8 ergeben sich Weißgrade > 85%.

Anstelle der mengenmäßig begrenzten Gasquelle 11 kann auch in der REA anfallendes SO₂ nach entsprechender Zwischenbehandlung zur Begasung des Waschwassers im Behälter 13 bzw. zum Einblasen in den Rührer 17 genutzt werden. Die dazu erforderlichen Anlagen zur Erhöhung von SO₂-Konzentrationen in Gasgemischen sind dem Stande der Technik bekannt.

Der bauliche Mehraufwand durch die Begasung des ohnehin erforderlichen Waschwassers mit SO₂ ist relativ gering und erschöpft sich in der Zuordnung einer geeigneten Gasquelle 11 und der dosierten Zufuhr von gasförmigem SO₂ in den Waschwasserbehälter 13. Im übrigen können der technologische Gesamtaufbau und die Verfahrensführung herkömmlicher Art sein. Der wesentlich höhere Weißgrad des Reingipses führt zu einem wesentlich hochwertigeren und damit attraktiveren Produkt, dessen erzielbarer Marktpreis die verfahrenstechnischen Kosten kompensiert oder sogar überkompensiert.

## Patentansprüche

1. Verfahren zur Verbesserung des Weißgrades von Rohgips, wobei der bei der Rauchgasentschwefelung mittels Kalkmilch in Form einer Suspension erhaltene Rohgips auf einem Vakuumbandfilter als Filterkuchen abgelegt und mit Waschwasser gewaschen wird,
**dadurch gekennzeichnet**,
daß der Rohgips mit mit SO₂ begastem Waschwasser gewaschen wird.

2. Verfahren nach Anspruch 1, dadurch gekennzeichnet, daß die Begasung des Waschwassers mit SO₂ bei einer Temperatur von 25 bis 35°C erfolgt.

3. Verfahren nach einem der Ansprüche 1 und 2, dadurch gekennzeichnet, daß der Filterkuchen in einer zweiten Zone des Vakuumbandfilters mit dem SO₂-haltigen Waschwasser gewaschen wird.

4. Verfahren nach einem der Ansprüche 1 bis 3, dadurch gekennzeichnet, daß das Waschwasser mit dem SO₂ so lange begast wird, bis eine Konzentration des SO₂ von etwa 0,5 - 1,5 g/l im Waschwasser erreicht ist.

5. Verfahren zur Verbesserung des Weißgrades von Rohgips, wobei der bei der Rauchgasentschwefelung in Form einer Suspension erhaltene Rohgips auf einem Vakuumbandfilter als Filterkuchen abgelegt und mit Waschwasser gewaschen wird, dadurch gekennzeichnet, daß die Rohgipssuspension mit in Wasser gelöstem SO₂ behandelt wird, bevor der Rohgips auf dem Vakuumbandfilter abgelegt wird.

6. Verfahren nach Anspruch 5, dadurch gekennzeichnet, daß die Rohgipssuspension während der Behandlung gerührt wird.

## Claims

1. Method for improving the degree of whiteness of gypsum rock, wherein the gypsum rock, which has been obtained during the flue gas desulphurisation by means of lime milk in the form of a suspension, is deposited as filter cake on a vacuum belt filter and washed with washing water, characterised thereby, that the gypsum rock is washed with washing water gassed by sulphur dioxide.

2. Method according to claim 1, characterised thereby, that the gassing of the washing water by sulphur dioxide takes place at a temperature of 25° to 35°.

3. Method according to one of the claims 1 and 2, characterised thereby, that the filter cake is washed with the washing water containing sulphur dioxide in a second zone of the vacuum belt filter.

4. Method according to one of the claims 1 to 3, characterised thereby, that the washing water is gassed by the sulphur dioxide until a concentration of the sulphur dioxide of about 0.5 to 1.5 grams per litre in the washing water is obtained.

5. Method for improving the degree of whiteness of gypsum rock, wherein the gypsum rock, which has been obtained in the form of a suspension during the flue gas desulphurisation, is deposited as filter cake on a vacuum belt filter and washed with washing water, characterised thereby, that the gypsum rock suspension is treated with sulphur dioxide dissolved in water before the gypsum rock is deposited on the vacuum belt filter.

6. Method according to claim 5, characterised thereby, that the gypsum rock suspension is stirred during the treatment.

## Revendications

1. Procédé pour l'amélioration du degré de blanc du plâtre brut dans lequel le plâtre brut obtenu lors de -la désulfuration de gaz de combustion au moyen de lait de chaux sous la forme d'une suspension est disposé sur un filtre à bande sous vide en tant que gâteau du filtre et est lavé avec de l'eau de lavage,
caractérisé en ce que
le plâtre brut est lavé avec de l'eau de lavage chargée de SO₂.

2. Procédé selon la revendication 1 caractérisé en ce que le gazage de l'eau de lavage par SO₂ se produit à une température de 25 à 35°C.

3. Procédé selon l'une des revendications 1 et 2 caractérisé en ce que le gâteau du filtre est lavé dans une seconde zone du filtre à bande sous vide avec l'eau de lavage contenant SO₂.

4. Procédé selon l'une des revendications 1 à 3 caractérisé en ce que l'eau de lavage est gazéifiee de SO₂ jusqu'à ce que l'on obtienne une concentration de SO₂ d'environ 0,5-1,5 g/l dans l'eau de lavage.

5. Procédé pour l'amélioration du degré de blanc du plâtre brut dans lequel le plâtre obtenu dans la désulfuration de gaz de combustion sous la forme d'une suspension est déposé sur un filtre à bande sous vide en tant que gâteau du filtre et est lavé avec une eau de lavage, caractérisé en ce que la suspension du plâtre brut est traitée avec SO₂ dissous dans l'eau avant que le plâtre brut ne soit déposé sur le filtre à bande sous vide.

6. Procédé selon la revendication 5 caractérisé en ce que la suspension de plâtre brut est soumise à agitation pendant le traitement.
